(19) Europäisches Patentamt
European Patent Office
Office européen des brevets

(11) **EP 1 511 043 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(51) Int Cl.:
***G21K 1/06*** *(2006.01)*

(21) Anmeldenummer: **04400040.4**

(22) Anmeldetag: **23.07.2004**

(54) **Monochromatisierende röntgenoptische Anordnung**

X-ray optical arrangement for generating monochromatic X-rays

Optique pour rayon x permettant de produire des rayons x monochromatiques

(84) Benannte Vertragsstaaten:
**AT BE BG CH CY CZ DE DK EE ES FI FR GB GR HU IE IT LI LU MC NL PL PT RO SE SI SK TR**

(30) Priorität: **26.07.2003 DE 10335296**
**12.08.2003 DE 10337996**

(43) Veröffentlichungstag der Anmeldung:
**02.03.2005 Patentblatt 2005/09**

(73) Patentinhaber: **Fraunhofer-Gesellschaft zur Förderung der angewandten Forschung e.V. 80686 München (DE)**

(72) Erfinder: **Dietsch, Reiner, Dipl.-Phys. 01217 Dresden (DE)**

(74) Vertreter: **Pfenning, Meinig & Partner GbR Patent- und Rechtsanwälte Gostritzer Strasse 61-63 01217 Dresden (DE)**

(56) Entgegenhaltungen:
WO-A-02/065481          DD-A- 292 101
DE-A- 4 443 853

• ARNDT U W: "FOCUSING OPTICS FOR LABORATORY SOURCES IN X-RAY CRYSTALLOGRAPHY" JOURNAL OF APPLIED CRYSTALLOGRAPHY, COPENHAGEN, DK, Bd. 23, 1990, Seiten 161-168, XP009041316 ISSN: 0021-8898
• DEUTSCH M ET AL: "KALPHA AND KBETA X-RAY EMISSION SPECTRA OF COPPER" PHYSICAL REVIEW. A, AMERICAN PHYSICAL SOCIETY; AMERICAN INSTITUTE OF PHYSICS, NEW, US, Bd. 51, Nr. 1, Januar 1995 (1995-01), Seiten 283-296, XP001204199 ISSN: 1050-2947

**Beschreibung**

Die Erfindung betrifft monochromatisierende röntgenoptische Anordnungen, bei denen mit herkömmlichen Labor-Röntgenquellen unterschiedliche Untersuchungen mit Röntgenstrahlung, die eine erhöhte Monochromasie (Energie-Auflösung) der Strahlung und gleichzeitig eine erhöhte Intensität der Röntgenstrahlung erfordern.

Bei den herkömmlichen Lösungen werden bisher zwei Gruppen von Kristalloptiken eingesetzt, um die gewünschte Separation und Auswahl einer bestimmten Wellenlänge aus dem Spektrum der Röntgenstrahlung einer Röntgenstrahlquelle ausnutzen zu können. Einmal liefern die hierfür eingesetzten Kristalle mit hoher Mosaizität (z.B. Graphit, LiF) eine in der Regel ausreichend große integrale Intensität der ausgewählten monochromatischen Röntgenstrahlung. Es ist aber eine stark eingeschränkte Energieauflösung erreichbar. Für eine erhöhte Energieauflösung werden andererseits üblicherweise dementsprechende Einkristalloptiken z.B. Si, Ge oder $\alpha$-Quarz, die mit speziellen Orientierungen geschnitten sind (den so genannten "Channel-Cuts") in unterschiedlichsten Ausführungen eingesetzt. Mit solchen Kristallen kann eine erhöhte Energieauflösung mittels erreichbarer Bragg-Reflexion an den Netzebenen der Kristalle erreicht werden.

Bei Berücksichtigung der Bragg-Beziehung

$$\lambda = 2d_{hkl} \ sin\Theta_{hkl} \qquad (1)$$

ergeben sich Winkel- und Energie-Auflösung zu

$$E/\Delta E = \lambda/\Delta\lambda = tan\Theta_{hkl}/\Delta\Theta_{hkl} \ (2).$$

Dementsprechend sind erhöhte Winkel- und Energieauflösungen zwingend bei Einhaltung von Bragg-Reflexionen als Wirkprinzip für die Monochromatisierung aneinander gebunden, wobei das Verhältnis E/$\Delta$E im Bereich zwischen $10^3$ bis $10^4$ liegt.

Damit ist über die BRAGG-Reflexion an Kristallen das K$\alpha_{1,2}$-Duplett mit den Kristallen trennbar, da die Energie- bzw. Wellenlängendifferenz dieser eng benachbarten Linien in der Größenordnung $E_{K\alpha 1}/(E_{K\alpha 1}-E_{K\alpha 2}) \approx 200$ bis 500 liegt.

Daraus ergibt sich zwangsläufig eine geringe Winkelakzeptanz (zulässige Winkelabweichung der einfallenden Strahlung bei der Reflexion) $\Delta\Theta_{hkl}$ an einem solchen Kristallmonochromator-ein- und ausgang, so dass eine erheblich reduzierte integrale Intensität der ausnutzbaren monochromatischen Röntgenstrahlung die Folge ist.

Durch eine Kombination von Kollimationsstrahloptiken auf Grundlage von gradienten Multischichten und solchen monochromatisierenden Kristalloptiken kann die Intensität der nutzbaren monochromatisierten Röntgenstrahlung erhöht werden, in dem durch eine solche kollimierende Optik ein divergenter Strahlanteil der Röntgenstrahlung vor Eintritt in einen Kristallmonochromator kollimiert wird.

Trotz dieses Aufwandes ist aber die Winkeldivergenz des kollimierten Strahles im Nachgang zu einer solchen Gradientenmultischichtoptik immer noch um ca. eine Größenordnung höher als die erforderliche Winkelakzeptanz der monochromatisierenden Kristalloptik. Dadurch kann nur ein geringer reduzierter Anteil der monochromatisierten und kollimierten Röntgenstrahlung ein solches monochromatisierendes kristalloptisches Element durchdringen.

Aus diesen Gründen werden daher zur Erreichung einer erhöhten Intensität der monochromatisierten Röntgenstrahlung die jeweils intensitätsstärksten Wellenlängen (Linien) aus dem Spektrum von Röntgenstrahlungsquellen geeigneter Anodenbestandteile für röntgenanalytische Untersuchungen ausgewählt. Dies betrifft in der Regel die bezüglich ihrer Wellenlänge nah beieinander liegenden K$\alpha$-Linien typischer Elemente, wie z.B. Chrom, Eisen, Kobalt, Kupfer, Molybdän, Silber oder auch Wolfram.

Nach dem Stand der Technik wird daher durch Auswahl einer Alternative ein Kompromiss bezüglich einer erhöhten Energieauflösung oder einer erhöhten Intensität eingegangen. Für eine erhöhte Energieauflösung erfolgt eine Fokussierung der monochromatisierten Röntgenstrahlung in eine Detektorebene oder zur Erreichung einer erhöhten Intensität erfolgt eine Fokussierung in eine Probenebene. Dazwischen sind wiederum weitere Kompromisslösungen möglich, die jedoch jeweils zu einer entsprechenden Reduzierung der erreichbaren Energie-Auflösung oder Intensität führen. So stellt beispielsweise der Einsatz von monochromatisierter paralleler Röntgenstrahlung einen Spezialfall für eine solche Kompromisslösung dar.

Zur Erzielung einer zumindest nahezu optimalen Energieauflösung wird daher bisher ein hinreichend monochromatischer Primärstrahl, in der Regel reine K$\alpha_1$-Strahlung ohne Anteile von K$\alpha_2$-Strahlung ausgewählt. Auch für eine solche K$\alpha_1$-Strahlung mit erhöhter Intensität können mit den hochauflösenden Kristallröntgenoptiken nur relativ kleine integrale Intensitäten der monochromatisierten Röntgenstrahlung ausgenutzt werden.

Infolge der Komplexität der hierfür eingesetzten röntgenoptischen Anordnungen ergibt sich ein erheblicher Aufwand für die Bedienung und Unterhaltung.

Für röntgenanalytische Untersuchungen ist es aber häufig nicht erforderlich, die jeweilige monochromatisierte Röntgenstrahlung mit hoher Winkelauflösung auf eine Probe zu richten, sondern es genügt auch mit einer auf eine bestimmte Probe angepassten Winkelauflösung, die in der Regel ca. eine Größenordnung oberhalb von Kristallröntgenoptiken liegt, zu arbeiten.

In DE 44 43 853 A1 ist eine Vorrichtung mit einer Röntgenstrahlungsquelle beschrieben, die einen gekrümmten Spiegel, in dessen Brennpunkt eine Röntgenstrahlungsquelle angeordnet ist, aufweist. Die der Röntgenstrahlung zugewandte Oberfläche des Spiegels ist mit einer in seiner Dicke unterschiedlichen Multilayerschicht über die Länge des Spiegels versehen.

Aus WO 02/065481 A1 ist eine ähnliche Anordnung bekannt. Es wird Röntgenstrahlung mit zwei solcher reflektierenden Elemente umgelenkt und durch eine Blende geführt. Dabei soll die Röntgenstrahlung auch monochromatisiert werden.

Es ist daher Aufgabe der Erfindung, eine monochromatisierende röntgenoptische Anordnung zur Verfügung zu stellen, mit der monochromatisierte Röntgenstrahlung mit erhöhter Intensität erhalten werden kann.

Erfindungsgemäß wird diese Aufgabe mit einer monochromatisierenden röntgenoptischen Anordnung, die die Merkmale des Anspruchs 1 aufweist, gelöst. Vorteilhafte Ausgestaltungsformen und Weiterbildungen der Erfindung können mit den in den untergeordneten Ansprüchen bezeichneten Merkmalen gelöst werden.

Die erfindungsgemäße monochromatisierende röntgenoptische Anordnung ist daher so aufgebaut, dass Röntgenstrahlung einer Röntgenstrahlquelle auf ein reflektierendes die Röntgenstrahlung monochromatisierendes Element gerichtet wird.

Das jeweils eingesetzte reflektierende Element ist dabei so angeordnet, ausgerichtet und/oder so geformt, dass für eine aus dem Spektrum der Röntgenstrahlung ausgewählte Wellenlänge $\lambda$ mit entsprechenden Einfallswinkeln $\Theta$ die Bragg'sche-Gleichung erfüllt ist.

Des Weiteren ist für die Monochromatisierung auf die jeweils ausgewählte Wellenlänge $\lambda$ auf dem reflektierenden Element ein Multischichtsystem ausgebildet, das aus mehreren sich periodisch wiederholenden Schichtpaaren gebildet ist. Solche reflektierenden Elemente werden üblicherweise auch als "Göbel-Spiegel" bezeichnet.

Die erfindungsgemäß ausgewählte Wellenlänge $\lambda$ aus dem Spektrum der Röntgenstrahlung, auf die das erfindungsgemäß einzusetzende reflektierende Element abgestimmt ist, wird durch das aufgebrachte Multischichtsystem von weiteren Wellenlängen $\lambda$ des Röntgenstrahlspektrums, insbesondere den in der Beschreibungseinleitung bereits angesprochenen $K\alpha_{1,2}$-Linien getrennt.

Die monochromatische Röntgenstrahlung wird ohne den Einsatz von Kristalloptiken erreicht.

Besonders bevorzugt haben sich als ausgewählte Wellenlänge $\lambda$ K$\beta$-Linien eines Elementes, das ein Anodenbestandteil der Röntgenstrahlquelle ist, herausgestellt. So können beispielsweise die K$\beta$-Linien von Kupfer, Kobalt, Eisen, Chrom, Molybdän, Silber, Wolfram oder Titan ausgewählt werden.

Es besteht aber auch die Möglichkeit eine Wellenlänge $\lambda$ auszuwählen, die in einem geeigneten Ausschnitt des Bremskontinuums der Röntgenstrahlungsquelle liegt. Diese Wellenlänge sollte aber außerhalb, also in einem ausreichend großen Abstand von $_{K\alpha1,2}$-Linien oder anderen Liniengruppen des Emissionsspektrums liegen.

Das erfindungsgemäß einzusetzende reflektierende Element kann bevorzugt eine konkav gekrümmte Oberfläche, auf der das Multischichtsystem ausgebildet ist, aufweisen. Die Krümmung kann so gewählt werden, dass die entsprechend monochromatisierte Röntgenstrahlung fokussiert oder auch kollimiert wird.

Besonders bevorzugt kann die Oberfläche des reflektierenden Elementes, auf der das Multischichtsystem ausgebildet ist, in Parabelform gekrümmt sein und das Multischichtsystem als Gradientenmultischichtsystem ausgebildet sein, so dass die zu monochromatisierende Röntgenstrahlung unter Berücksichtigung der jeweils ausgewählten Wellenlänge $\lambda$ die BRAGG-Bedingung auf der gesamten Oberfläche des Multischichtsystems erfüllt.

Neben dem mindestens einen erfindungsgemäß einzusetzenden reflektierenden Element kann ein weiteres reflektierendes Element, auf dem ebenfalls ein auf die ausgewählte Wellenlänge $\lambda$ abgestimmtes Multischichtsystem ausgebildet ist, im Strahlengang eingesetzt werden. Ein solches zweites reflektierendes Element ist dann wiederum so ausgebildet, ausgerichtet und angeordnet, dass die vom ersten reflektierenden Element reflektierte bereits monochromatisierte Röntgenstrahlung entweder direkt oder von einer Probe unter dem Winkel 2θ gebeugt auf das Multischichtsystem des zweiten reflektierenden Elementes unter Einhaltung der Bragg'schen-Gleichung auftrifft.

So kann die Monochromatisierung auf die ausgewählte Wellenlänge $\lambda$, also die entsprechende Energieauflösung weiter erhöht und/oder weitere Beeinflussung von Strahlquerschnitt, Divergenz der monochromatisierten Röntgenstrahlung erreicht werden.

Die erfindungsgemäße monochromatisierende röntgenoptische Anordnung kann auch so ausgebildet sein, dass das eine oder mehrere reflektierende, mit Multischichtsystem versehene röntgenoptische Element(e) einfach gegen ein anderes reflektierendes Element ausgetauscht werden kann, das wiederum mit einem entsprechenden Multischichtsystem auf eine jeweils andere ausgewählte Wellenlänge $\lambda$ abgestimmt ist. Mittels einer Justiervorrichtung kann dann eine entsprechende Ausrichtung eingestellt werden, so dass die dann andere ausgewählte Wellenlänge wiederum auf das Multischichtsystem des reflektierenden Elementes unter Einhaltung der Bragg'schen-Gleichung auftrifft.

Die entsprechenden reflektierenden Elemente mit den jeweiligen Multischichtsystemen können unter Berücksichtigung der jeweils ausgewählten Wellenlänge λ und bezüglich der jeweiligen Winkelauflösung auf das jeweilige Messproblem angepasst, ausgewählt werden.

So können erhöhte integrale Reflektivitäten der reflektierenden Elemente mit den Multischichtsystemen eine in ihrer Intensität monochromatisierte Röntgenstrahlung der jeweils ausgewählten Wellenlänge mit erheblich reduzierter Bandbreite um diese Wellenlänge λ, also mit hoher Energieauflösung erhalten werden.

Wesentlich ist es dabei, dass diese erhöhte Energieauflösung der monochromatisierten Röntgenstrahlung allein durch die Emissionscharakteristik der Röntgenstrahlungsquelle bestimmt wird und nicht der Auflösung durch die BRAGG-Reflexion der Röntgenstrahlung, am Multischichtsystem entspricht. Es ist davon auszugehen, dass Energieauflösung und Winkelauflösung voneinander entkoppelt sind.

Die erwähnten bevorzugt auszuwählenden Wellenlängen λ weisen zwar gegenüber den Wellenlängen, die bei den Lösungen des Standes der Technik eingesetzt werden, eine an sich deutlich reduzierte Intensität auf, sie liegen aber innerhalb von Spektralbereichen herkömmlicher Röntgenstrahlungsquellen, die bisher für röntgenanalytische Anwendungen nicht eingesetzt werden konnten und auch werden.

Wegen des erheblich reduzierten Winkeleinflusses können aber mit den erfindungsgemäß ausgewählten Wellenlängen λ monochromatisierte Röntgenstrahlungsintensitäten erreicht werden, die bis zu einem Faktor von 20 gegenüber herkömmlichen Lösungen, bei denen an sich Wellenlängen (Kα-1-Linien) mit deutlich höherer Ausgangsintensität eingesetzt worden sind, erreicht werden. So weisen beispielsweise Kβ-Linien eine gegenüber Kα-1-Linien 5-fach reduzierte Intensität auf.

Es treten aber keine erheblichen Intensitätsverluste, wie bei der Monochromatisierung mit kristalloptischen Elementen auf, wie sie bei der Monochromatisierung des Kα-Dupletts zu verzeichnen sind.

Die bei der erfindungsgemäßen Anordnung erhaltene monochromatisierte Röntgenstrahlung kann aufgrund ihrer geringen Linien-Breite unmittelbar für hochauflösende Analysen eingesetzt werden. Die Erfindung kann bei allen kommerziell erhältlichen Röntgenstrahlungsquellen eingesetzt werden und es ist eine vollständige Trennung der ausgewählten Wellenlänge von Kα-Linien erreichbar.

Nachfolgend sollen die erfindungsgemäß erreichbaren Effekte im Vergleich zum Stand der Technik verdeutlicht werden.

Dabei zeigen:

Figur 1     ein Diagram von Reflexionsspektren mit Cu-Kα-$_{1,2}$ Linien mit einer Quarz Triplett Referenz und

Figur 2     ein Diagram von Reflexionsspektren mit Co-Kβ-(1) Strahlung mit einer Quarz Triplett Referenz.

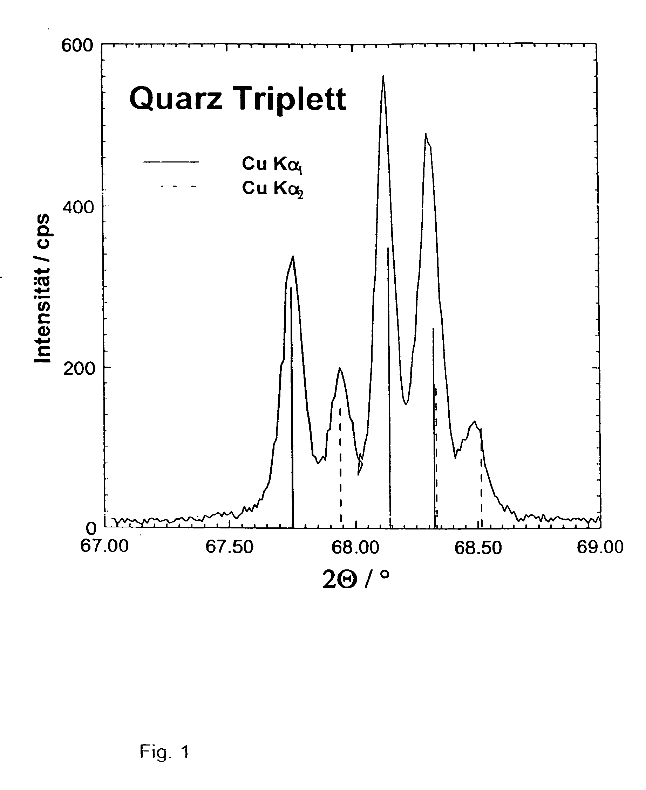

Bei einer Messung bei der mit einem monochromatisierenden reflektierenden Element mittels eines Multischichtsystems eine Trennung der Cu-K Emissionslinien erreicht werden sollte sind die entsprechenden Reflexionsintensitäten im in Figur 1 gezeigten Diagramm wiedergegeben.

Es ist erkennbar, dass für die Reflexionen eines Quarz Tripletts als Referenz an Stelle von 6 nunmehr 5 signifikante Reflexionen erfassbar sind. Dies ist der Fall, da die mittlere Cu-Kα (2)-Reflexion und die dritte Cu-Kα (1) Reflexion zusammenfallen.

Eine Auswertung ist daher nur bei einer erheblichen Entfaltung des gemessenen Gesamtspektrums möglich, wobei insbesondere die Überlagerung schwächerer Reflexionen durch starke Reflexionen bzw. die Häufung mehrerer Reflexionen in einem begrenzten Winkelbereich Probleme bereiten.

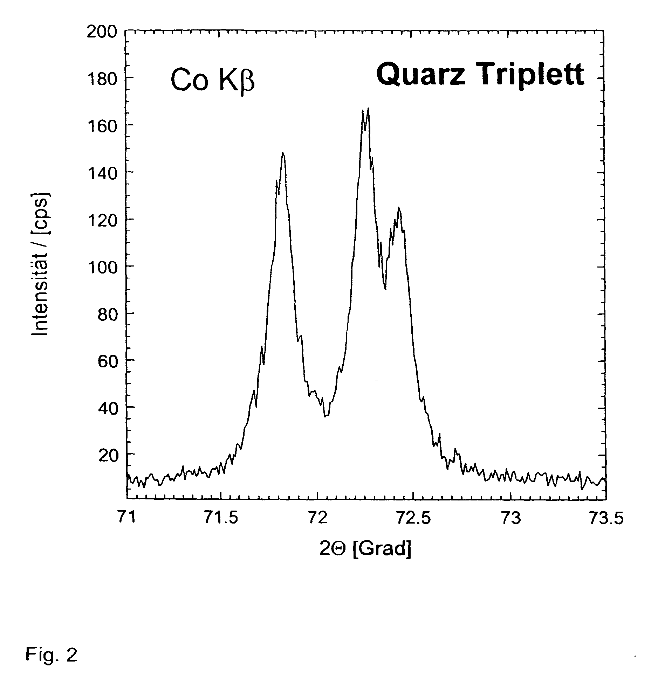

Bei dem in Figur 2 gezeigten Diagram wird deutlich, dass bei einer Co-K β-(1) Strahlung drei deutlich voneinander getrennte Reflexionen eines Quarz Tripletts auftreten. Es ist eine deutlich signifikantere und einfachere Auswertung möglich, da keine Überlappungen von unterschiedlichen Reflexionen berücksichtigt werden müssen.

Mit der Cu Kα-Strahlung ist dieses Ergebnis nur unter Einsatz einer Kristalloptik erreichbar. Aufgrund der geringen Winkelakzeptanz ist aber die Intensität auf weniger als 10 % reduziert.

**Patentansprüche**

**1.** Monochromatisierende röntgenoptische Anordnung, bei der Röntgenstrahlung einer Röntgenstrahlquelle auf ein reflektierendes die Röntgenstrahlung monochromatisierendes Element gerichtet ist,
dabei das reflektierende Element so angeordnet, ausgerichtet und/oder so geformt ist, dass für eine aus dem Spektrum der Röntgenstrahlung ausgewählte Wellenlänge λ mit entsprechenden Einfallswinkeln θ die Bragg' sche Gleichung erfüllt und

auf dem reflektierenden Element zur Monochromatisierung ein auf diese Wellenlänge λ abgestimmtes Multischichtsystem, das aus mehreren sich periodisch wiederholenden Schichtpaaren gebildet ist, ausgebildet ist und

die jeweilige Wellenlänge λ aus dem Spektrum der Röntgenstrahlung der jeweiligen Röntgenstrahlquelle, so ausgewählt ist, dass sie einer kβ-Linie eines Elementes, das ein Anodenbestandteil der Röntgenstrahlquelle ist, entspricht oder aus dem Bremskontinuum der Röntgenstrahlquelle, außerhalb eines $K\alpha_{1,2}$-Linien-Dupletts der Röntgenstrahlung ausgewählt ist und eine sichere Trennung von weiteren Wellenlängen λ des Röntgenstrahlungsspektrums mit erhöhten Intensitäten oder Energien erreichbar ist und

vom reflektierenden Element reflektierte monochromatisierte Röntgenstrahlung auf ein weiteres reflektierendes Element, auf dem ein auf die ausgewählte Wellenlänge λ abgestimmtes Multischichtsystem ausgebildet ist, mit Einfallswinkeln θ unter Einhaltung der Bragg'schen Gleichung gerichtet ist.

2. Anordnung nach Anspruch 1,
   **dadurch gekennzeichnet, dass** die kβ-Linie von Cu, Co, Fe, Cr, Mo, Ag, W oder Ti ausgewählt ist.

3. Anordnung nach einem der vorhergehenden Ansprüche, **dadurch gekennzeichnet, dass** das reflektierende Element eine konkav gekrümmte Oberfläche auf der das Multischichtsystem ausgebildet ist, aufweist.

4. Anordnung nach einem der vorhergehenden Ansprüche, **dadurch gekennzeichnet, dass** die Oberfläche mit dem Multischichtsystem in Parabelform gekrümmt und das Multischichtsystem als Gradienten-Multischichtsystem ausgebildet ist.

5. Anordnung nach einem der vorhergehenden Ansprüche, **dadurch gekennzeichnet, dass** das/die reflektierende Element(e) mit einem für eine ausgewählte Wellenlänge λ ausgebildeten Multischichtsystem austauschbar ist/sind.

## Claims

1. Monochromatising X-ray optical arrangement, in which X-radiation from an X-ray source is directed at a reflective element that monochromatises the X-radiation,
   wherein the reflective element is arranged, oriented and/or shaped such that the Bragg equation is satisfied for a wavelength λ, selected from the spectrum of the X-radiation, with suitable angles of incidence θ, and
   a multilayer system, matched to this wavelength λ and formed from a plurality of periodically repeating layer pairs, is formed on the reflective element for monochromatisation, and
   the respective wavelength λ is selected from the spectrum of the X-radiation from the respective X-ray source such that it corresponds to a kβ line of an element which is an anode constituent of the X-ray source, or is selected from the bremsstrahlung continuum of the X-ray source, outside a $K\alpha_{1,2}$ line doublet of the X-radiation, and a reliable separation from further wavelengths λ of the X-radiation spectrum with increased intensities or energies can be achieved,
   and monochromatised X-radiation reflected by the reflective element is directed at a further reflective element, on which a multilayer system matched to the selected wavelength λ is formed, with angles of incidence θ while satisfying the Bragg equation.

2. Arrangement according to Claim 1,
   **characterised in that** the kβ line of Cu, Co, Fe, Cr, Mo, Ag, W or Ti is selected.

3. Arrangement according to one of the preceding claims, **characterised in that** the reflective element has a concavely curved surface, on which the multilayer system is formed.

4. Arrangement according to one of the preceding claims, **characterised in that** the surface having the multilayer system is parabolically curved and the multilayer system is designed as a gradient multilayer system.

5. Arrangement according to one of the preceding claims, **characterised in that** the reflective element(s) having a multilayer system designed for a selected wavelength λ is(are) exchangeable.

## Revendications

1. Agencement optique radiologique monochromatisant, dans lequel le rayonnement X d'une source de rayons X est

EP 1 511 043 B1

dirigé sur un élément réfléchissant monochromatisant le rayonnement X,

dans lequel l'élément réfléchissant est disposé, orienté et/ou formé de telle sorte que pour une longueur d'onde λ, choisie dans le spectre du rayonnement X et ayant les angles d'incidence θ adéquats, l'équation de Bragg est satisfaite, et

dans lequel sur l'élément réfléchissant est réalisé pour la monochromatisation un système multicouche accordé sur cette longueur d'onde λ, qui se compose de plusieurs paires de couches qui se répètent de façon périodique, et

dans lequel la longueur d'onde λ respective est choisie dans le spectre du rayonnement X de la source de rayons X respective de telle sorte qu'elle correspond à une ligne kβ d'un élément qui est une composante anodique de la source de rayons X, ou est choisie dans le spectre continu de freinage de la source de rayons X, en dehors d'un doublet de lignes $K\alpha_{1,2}$ du rayonnement X, et une séparation fiable des autres longueurs d'onde λ du spectre de rayonnement X peut être obtenue avec des intensités ou énergies plus élevées, et

dans lequel un rayonnement X monochromatisé, réfléchi par l'élément réfléchissant, est dirigé sur un autre élément réfléchissant sur lequel est réalisé un système multicouche accordé sur la longueur d'onde λ choisie, avec des angles d'incidence θ, tout en respectant l'équation de Bragg.

2. Agencement selon la revendication 1, **caractérisé en ce que** la ligne kβ est choisie parmi Cu, Co, Fe, Cr, Mo, Ag, W ou Ti.

3. Agencement selon l'une quelconque des revendications précédentes, **caractérisé en ce que** l'élément réfléchissant présente une surface à courbure concave sur laquelle le système multicouche est réalisé.

4. Agencement selon l'une quelconque des revendications précédentes, **caractérisé en ce que** la surface avec le système multicouche est courbée sous forme de parabole et le système multicouche est réalisé comme un système multicouche à gradient.

5. Agencement selon l'une quelconque des revendications précédentes, **caractérisé en ce que** le ou les éléments réfléchissants sont échangeables avec un système multicouche réalisé pour une longueur d'onde λ choisie.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4443853 A1
- WO 02065481 A1